# FASCICULE DE BREVET EUROPEEN

(11) **EP 3 640 134 B1**
(45) Date de publication et mention de la délivrance du brevet: **10.03.2021**
(21) Numéro de dépôt: 19195883.4
(22) Date de dépôt: 06.09.2019
(51) Int. Cl.: B64C 25/24, B64C 25/26, B64C 13/50, F16H 25/20, F16H 25/22, F16H 25/24

(54) **ACTIONNEUR LINEAIRE A COMMANDE ÉLECTRIQUE**
LINEARES STELLGLIED MIT ELEKTRISCHER STEUERUNG
LINEAR ACTUATOR WITH ELECTRICAL CONTROL

(30) Priorité: 17.10.2018 FR 1801088
(43) Date de publication de la demande: 22.04.2020
(73) Titulaire: Airbus Helicopters, 13725 Marignane Cedex (FR)
(72) Inventeur: DENAVAUX, Marc, 13790 Chateauneuf Le Rouge (FR)
(74) Mandataire: GPI & Associés

(56) Documents cités:
- WO-A1-2018/122224
- WO-A2-2015/048970
- DE-B3-102016 222 598
- US-A1- 2016 025 199

## Description

La présente invention se rapporte au domaine des actionneurs linéaires, tels des vérins, pilotés électriquement pour générer un déplacement d'un objet ou d'un mécanisme par rapport à un autre. De tels actionneurs linéaires sont ainsi à commande électrique et sont reliés à une source d'énergie électrique permettant d'alimenter en électricité au moins un moteur électrique.

En outre, de tels actionneurs linéaires peuvent être utilisés dans de nombreux domaines et pour différentes applications telles que par exemple dans le domaine de l'aéronautique pour déplacer un organe aérodynamique permettant le pilotage d'un aéronef ou encore pour sortir et rétracter un train d'atterrissage d'aéronef.

Pour sortir et rétracter de tels trains d'atterrissage d'aéronef, il est généralement plus courant d'utiliser des actionneurs linaires à commande hydraulique. De tels actionneurs ont notamment été décrits dans les documents FR 2 402 790 et FR 2 406 739.

Cependant, ce type d'actionneur linéaire à commande hydraulique présente l'inconvénient de devoir équiper l'aéronef avec un grand nombre d'éléments de commande hydraulique tels que des durites, des pompes, des réservoirs de fluide et des distributeurs de commande hydraulique. En plus de la masse supplémentaire générée par ces nombreux éléments de commande hydraulique, ces éléments de commande doivent être reliés entre eux par de nombreux raccords hydrauliques susceptibles de provoquer des fuites de fluide hydraulique et par conséquent d'empêcher la sortie ou la rétraction du train d'atterrissage de l'aéronef.

Par ailleurs, on connait également, tels que décrits dans le document EP 2 319 760, des actionneurs rotatifs à commande électrique permettant de sortir et de rétracter des trains d'atterrissage d'aéronefs.

Cependant, de tels actionneurs rotatifs sont mécaniquement complexes à fabriquer et comportent une broche générant un encombrement latéral important formant saillie qui doit être solidarisée avec un châssis de l'aéronef. Par suite, un tel agencement latéral de ce type d'actionneurs rotatifs peut ainsi être incompatible avec les architectures existantes d'aéronefs et/ou peut imposer d'importantes modifications structurelles de ces aéronefs de manière à permettre leur implantation.

En outre, on connait également le document US 2016 / 025199 qui décrit un actionneur linéaire à commande électrique. Cependant, un tel actionneur ne permet pas de protéger des efforts externes un mécanisme de verrouillage automatique d'un dispositif extensible.

Le document WO 2015 /048970 décrit quant à lui un actionneur linéaire dépourvu de moyen de verrouillage automatique.

En outre, les documents DE 10 2016 222598 et Wo 2018 / 122224 présentent d'autres type d'actionneurs linéaires.

La présente invention a alors pour objet de proposer un actionneur linéaire et un train d'atterrissage d'aéronef associé permettant de s'affranchir des limitations mentionnées ci-dessus. En effet, un tel actionneur linéaire à commande électrique permet à la fois de présenter une masse limitée et de ne pas avoir de problème de fuite de fluide hydraulique lié aux actionneurs linéaires à commande hydraulique.

De plus, un tel actionneur linéaire à commande électrique peut être facilement implanté sur une architecture existante d'aéronef sans nécessiter de modification de la structure de l'aéronef.

L'invention se rapporte donc à un actionneur linéaire à commande électrique, l'actionneur linéaire comportant :
- un châssis,
- un dispositif extensible comportant une tige et un cylindre, la tige présentant par rapport au cylindre un degré de liberté en translation suivant une direction de déploiement/rétraction de l'actionneur linéaire,
- au moins un moteur électrique solidarisé au châssis, le(s) moteur(s) électrique(s) comportant un arbre d'entrainement mobile en rotation par rapport au châssis,
- au moins un organe de conversion pour convertir un mouvement de rotation de l'arbre d'entrainement du (ou des) moteur(s) électrique(s) en un mouvement de translation du dispositif extensible suivant la direction de déploiement/rétraction, le(s) organe(s) de conversion comportant d'une part un axe d'entrée mobile en rotation par rapport au châssis, l'axe d'entrée étant entrainé en rotation par l'arbre d'entrainement du (ou des) moteur(s) électrique(s), et d'autre part une pièce de sortie mobile en translation rectiligne par rapport au châssis suivant la direction de déploiement/rétraction, la pièce de sortie étant apte à déplacer suivant un mouvement de translation relative la tige par rapport au cylindre ou, alternativement, le cylindre par rapport à la tige, et
- des moyens de verrouillage automatique permettant d'empêcher le mouvement de translation relative entre la tige et le cylindre dans au moins une position extrémale choisie parmi une position extrémale rétractée du dispositif extensible et en une position extrémale déployée du dispositif extensible.

Selon l'invention un tel actionneur linéaire est remarquable en ce qu'il comporte un système de débrayage/d'embrayage automatique permettant de débrayer/d'embrayer mécaniquement la pièce de sortie du (ou des) organe(s) de conversion avec le dispositif extensible, le système de débrayage/d'embrayage automatique étant agencé dans un état débrayé lorsque le dispositif extensible est positionné dans l'une au moins des positions extrémales choisie parmi la position extrémale rétractée et la position extrémale déployée, le système de débrayage/d'embrayage automatique étant agencé dans un état embrayé lorsque le dispositif extensible est positionné dans une position intermédiaire agencée entre la position extrémale rétractée et la position extrémale déployée.

Autrement dit, dans l'état embrayé, le système de débrayage/d'embrayage automatique permet à la pièce de sortie du (ou des) organe(s) de conversion de transmettre un effort au dispositif extensible et ainsi réaliser le déplacement en translation relative de la tige par rapport au cylindre ou, alternativement, du cylindre par rapport à la tige.

En revanche, dans l'état débrayé, le système de débrayage/d'embrayage automatique permet de désolidariser la pièce de sortie du (ou des) organe(s) de conversion et le dispositif extensible. De cette manière, lorsque la tige ou le cylindre est soumis à une force extérieure, comme par exemple celle produite par la réaction du sol sur un train d'atterrissage, cette force extérieure n'est alors pas transmise à la pièce de sortie du (ou des) organe(s) de conversion.

Un tel système de débrayage/d'embrayage automatique est avantageux car les moyens de verrouillage automatique permettant d'empêcher le mouvement de translation relative entre la tige et le cylindre dans au moins une position extrémale présentent toujours un jeu de quelques dixièmes de millimètres, voire de quelques millimètres lorsque le dispositif extensible est sollicité par une force extérieure telle que la réaction du sol sur un train d'atterrissage.

Un tel jeu de fonctionnement entre la tige et le cylindre est problématique car dans ce cas, la force extérieure est alors transmise en tout ou partie à la pièce de sortie du (ou des) organe(s) de conversion qui peut être endommagée. Ce(s) organe(s) de conversion peu(ven)t par exemple être formé(s) par un (ou des) système(s) de vis sans fin, dans le(s)quel(s) une vis ou tige filetée coopère en liaison hélicoïdale avec un écrou directement ou par l'intermédiaire de billes pour limiter le frottement entre la vis et l'écrou. Ce type d'organe(s) de conversion est alors généralement désigné par l'expression de "vis à billes".

Cependant, si ce type d'organe(s) de conversion est optimal pour générer sans frottement le mouvement relatif de translation entre la tige et le cylindre du dispositif extensible, il n'est pas adapté pour encaisser des efforts suivant la direction de déploiement/rétraction. Le système de débrayage/d'embrayage automatique permet donc d'éviter cette transmission des efforts de réaction du sol sur un train d'atterrissage à l'organe de conversion.

Avantageusement, le système de débrayage/d'embrayage automatique peut comporter une bague à griffes munie de griffes déformables, la bague à griffes étant entrainée en translation par la pièce de sortie du (ou des) organe(s) de conversion et une bague interne mobile en translation par rapport à la bague à griffes selon la direction de déploiement/rétraction, des extrémités libres des griffes de la bague à griffes étant maintenues en position par la bague interne lorsque la bague interne est positionnée dans une position embrayée et les extrémités libres des griffes de la bague à griffes étant aptes à se déformer lorsque la bague interne est positionnée dans une position débrayée.

En d'autres termes, le système de débrayage/d'embrayage automatique est agencé dans l'état embrayé lorsque la bague interne est positionnée, par rapport à la bague à griffes, dans la position embrayée et, alternativement, est agencé dans l'état débrayé lorsque la bague interne est positionnée, par rapport à la bague à griffes, dans la position débrayée.

En outre, la bague interne peut être agencée coaxialement avec la bague à griffes suivant la direction de déploiement/rétraction du dispositif extensible. La bague interne est alors positionnée en regard d'une face interne de la bague à griffes pour pouvoir empêcher ou permettre un déplacement radial des extrémités libres de la bague à griffes vers une face externe de la bague interne.

En pratique, les extrémités libres des griffes peuvent générer une forme conique extérieure apte à coopérer avec une portion conique intérieure complémentaire ménagée dans le dispositif extensible.

Une telle forme conique des extrémités libres des griffes permet alors de rapprocher les extrémités libres les unes des autres par le déplacement relatif en translation de la bague à griffes par rapport au dispositif extensible lorsque la bague interne arrive, ou est positionnée, dans la position débrayée. Par ailleurs, la forme conique intérieure complémentaire du dispositif extensible peut être ménagée indifféremment dans le cylindre ou dans la tige.

Selon un exemple de réalisation avantageux de l'invention, le système de débrayage/d'embrayage automatique peut comporter des moyens de butée permettant d'empêcher un déplacement en translation selon la direction de déploiement/rétraction de la bague interne concomitamment avec la bague à griffes.

De tels moyens de butée permettent ainsi de stopper le déplacement en translation de la bague interne lorsque le dispositif extensible est arrivé dans la position extrémale rétractée ou dans la position extrémale déployée. En effet, dans ce cas, les moyens de verrouillage automatique s'enclenchent mais l'arbre d'entrainement du (ou des) moteur(s) électrique(s) continue(nt) d'entrainer le(s) organe(s) de conversion. Le(s) organe(s) de conversion continue(nt) donc de déplacer en translation la bague à griffes déformables mais pas la bague interne en contact avec les moyens de butée.

De tels moyens de butées peuvent notamment être formés par une butée à billes comportant deux bagues parallèles entre elles, l'une des deux bagues étant solidarisée avec une vis sans fin de(s) organe(s) de conversion.

Avantageusement, le système de débrayage/d'embrayage automatique peut comporter des moyens de rappel élastique aptes à se déformer élastiquement entre une position détendue et une position comprimée, les moyens de rappel élastique permettant, lorsque les moyens de rappel élastique sont agencés dans la position détendue, d'une part de maintenir la bague interne dans la position embrayée et d'autre part de déplacer en translation la bague interne concomitamment avec la bague à griffes.

Autrement dit, les moyens de rappel élastique permettent de rappeler automatiquement la bague interne dans la position embrayée lorsque l'arbre d'entrainement du (ou des) moteur(s) électrique(s) commence à entrainer le(s) organe(s) de conversion.

De tels moyens de rappel élastique peuvent être notamment formés pas un ou plusieurs ressorts hélicoïdaux et sont avantageusement comprimés puis détendus suivant la direction de déploiement/rétraction du dispositif extensible.

En pratique, le système de débrayage/d'embrayage automatique peut comporter une bague de guidage comportant des moyens de guidage aptes à réaliser une liaison de type glissière à un degré de liberté en translation entre la bague interne et la bague de guidage.

En d'autres termes, les moyens de guidage d'une telle bague de guidage peuvent présenter des gorges et des cannelures s'étendant longitudinalement suivant la direction de déploiement/rétraction du dispositif extensible. Ces gorges et cannelures coopèrent alors avec des cannelures et des gorges complémentaires ménagées dans la bague interne pour réaliser la liaison de type glissière suivant la direction de déploiement/rétraction.

Par ailleurs, des moyens de solidarisation peuvent être formés par des vis traversant radialement la bague à griffes et comportant une portion filetée venant se visser dans des taraudages complémentaires ménagés dans la pièce de sortie du (ou des) organe(s) de conversion. De cette manière, la bague de guidage et la bague à griffes sont solidarisées entre elles par serrage et ne présentent aucun degré de liberté l'une par rapport à l'autre.

Comme déjà évoqué, l'invention se rapporte également à un train d'atterrissage pour un aéronef, le train d'atterrissage comportant au moins une roue montée sur un bras de support.

Selon l'invention, un tel train d'atterrissage est remarquable ce qu'il comporte un actionneur linéaire tel que décrit ci-dessus, le dispositif extensible se déplaçant suivant la direction de déploiement/rétraction entre la position extrémale rétractée et la position extrémale déployée pour déplacer la (ou les) roue(s) et le bras de support du train d'atterrissage par rapport à un fuselage de l'aéronef.

Autrement dit, le train d'atterrissage selon l'invention comporte un actionneur linéaire à commande électrique muni d'un système de débrayage/d'embrayage automatique permettant de débrayer/d'embrayer mécaniquement la pièce de sortie du (ou des) organe(s) de conversion avec le dispositif extensible.

Comme précédemment décrit, le système de débrayage/d'embrayage automatique de l'actionneur est agencé dans un état débrayé lorsque le dispositif extensible est positionné dans l'une au moins des positions extrémales choisie parmi la position extrémale rétractée et la position extrémale déployée. En revanche, le système de débrayage/d'embrayage automatique de l'actionneur est agencé dans un état embrayé lorsque le dispositif extensible est positionné dans une position intermédiaire agencée entre la position extrémale rétractée et la position extrémale déployée.

L'invention et ses avantages apparaîtront avec plus de détails dans le cadre de la description qui suit avec des exemples donnés à titre illustratif en référence aux figures annexées qui représentent :
- la figure 1, une vue de côté d'un actionneur linéaire conforme à l'invention,
- les figures 2 à 5, des vues en coupe partielle illustrant différentes étapes du fonctionnement d'un système de débrayage/d'embrayage automatique, conformément à l'invention,
- la figure 6, une vue éclatée en perspective d'organes composant un système de débrayage/d'embrayage automatique, et
- la figure 7, une vue de côté d'un train d'atterrissage d'aéronef, conforme à l'invention.

Tout d'abord, il est précisé que les éléments présents dans plusieurs figures distinctes peuvent être affectés d'une seule et même référence.

Comme déjà évoqué l'invention se rapporte à un actionneur linéaire à commande électrique et à un train d'atterrissage d'un aéronef équipé d'un tel actionneur linéaire à commande électrique.

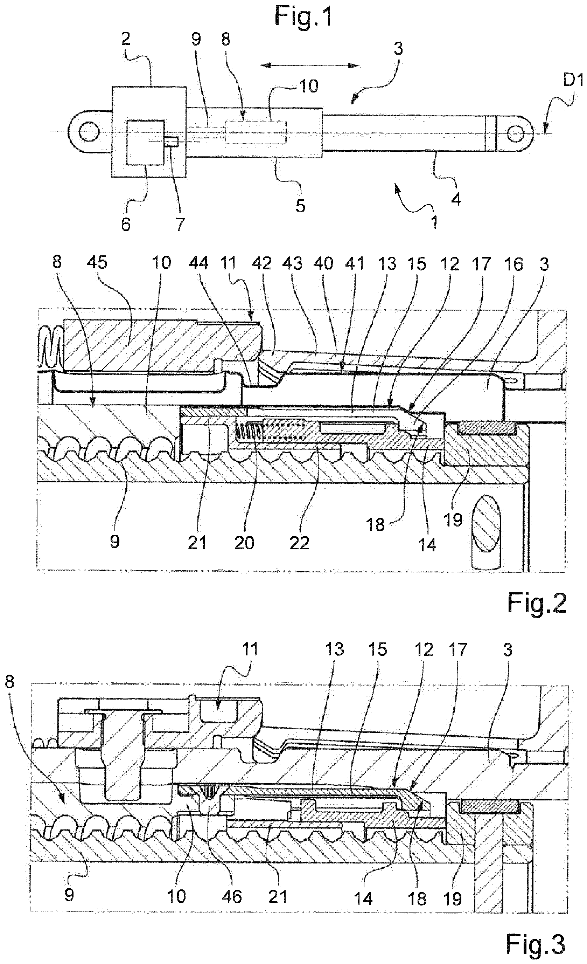

Tel que représenté à la figure 1, un tel actionneur linéaire 1 comporte un châssis 2 solidarisé mécaniquement avec un dispositif extensible 3 comportant une tige 4 et un cylindre 5.

Un tel châssis 2 permet notamment de recevoir un (ou plusieurs) moteur(s) électrique(s) 6 comportant un arbre d'entrainement 7 mobile en rotation par rapport au châssis 2. Le(s) moteur(s) électrique(s) 6 est (sont) alors relié(s) électriquement à une unité de commande électrique (non représentée) permettant de piloter électriquement un tel actionneur linéaire 1.

En outre, la tige 4 présente par rapport au cylindre 5 un degré de liberté en translation suivant une direction de déploiement/rétraction D1 de l'actionneur linéaire 1.

Par ailleurs, l'actionneur linéaire 1 comporte également au moins un organe de conversion 8 permettant de convertir un mouvement de rotation de l'arbre d'entrainement 7 du (ou des) moteur(s) électrique(s) 6 en un mouvement de translation du dispositif extensible 3 suivant la direction de déploiement/rétraction D1.

Ce(s) organe(s) de conversion 8 comporte(nt) alors un axe d'entrée 9 formé par exemple par une vis sans fin mobile en rotation par rapport au châssis 2. De plus, le(s) organe(s) de conversion 8 comporte(nt) également une pièce de sortie 10 formée par exemple par un écrou ou une douille montée sur billes, cette pièce de sortie 10 étant alors mobile en translation rectiligne par rapport au châssis 2 suivant la direction de déploiement/rétraction D1. Un tel axe d'entrée 9 est ainsi entrainé en rotation par l'arbre d'entrainement 7 du (ou des) moteur(s) électrique(s) 6 et peut permettre de déplacer en translation la pièce de sortie 10 coopérant avec le dispositif extensible 3.

Une telle pièce de sortie 10 permet de déplacer suivant un mouvement de translation relative la tige 4 du dispositif extensible 3 par rapport au cylindre 5 ou, alternativement, le cylindre 5 par rapport à la tige 4.

Au surplus tel que représenté aux figures 2 à 5, l'actionneur linéaire 1 comporte également des moyens de verrouillage automatique 11 permettant d'empêcher le mouvement de translation relative entre la tige 4 et le cylindre 5 dans au moins une position extrémale choisie parmi une position extrémale rétractée du dispositif extensible 3 et en une position extrémale déployée du dispositif extensible 3.

De tels moyens de verrouillage automatique 11 peuvent par exemple comporter une bague à griffes de verrouillage 40 coopérant avec une face extérieure 41 du dispositif extensible 3. Des extrémités libres 42 de griffes 43 de la bague à griffes de verrouillage 40 coopèrent avec une rainure 44 ménagée dans la face extérieure 41. Par ailleurs, une bague externe 45 est montée mobile en translation par rapport châssis 2 suivant la direction de déploiement/rétraction D1. Cette bague externe 45 permet alors d'empêcher un déplacement radial vers l'extérieur des extrémités libres 42 de griffes 43 lorsque le dispositif extensible 3 est positionné dans une position extrémale rétractée ou déployée.

Selon l'invention et tel que représenté aux figures 2 à 5, l'actionneur linéaire 1 comporte un système de débrayage/d'embrayage automatique 12 permettant de débrayer/d'embrayer mécaniquement la pièce de sortie 10 du (ou des) organe(s) de conversion 8 avec le dispositif extensible 3.

Tel que représenté à la figure 2, un système de débrayage/d'embrayage automatique 12 est agencé dans un état embrayé lorsque le dispositif extensible 3 est positionné dans une position intermédiaire agencée entre la position extrémale rétractée et la position extrémale déployée.

Les figures 2 à 4 permettent de montrer les différentes phases du déplacement relatif des éléments constituant le système de débrayage/d'embrayage automatique 12 depuis l'état embrayé permettant au(x) organe(s) de conversion 8 de transmettre un mouvement de translation au dispositif extensible 3 jusqu'à l'état débrayé dans lequel le dispositif extensible 3 est agencé dans la position extrémale rétractée ou déployée.

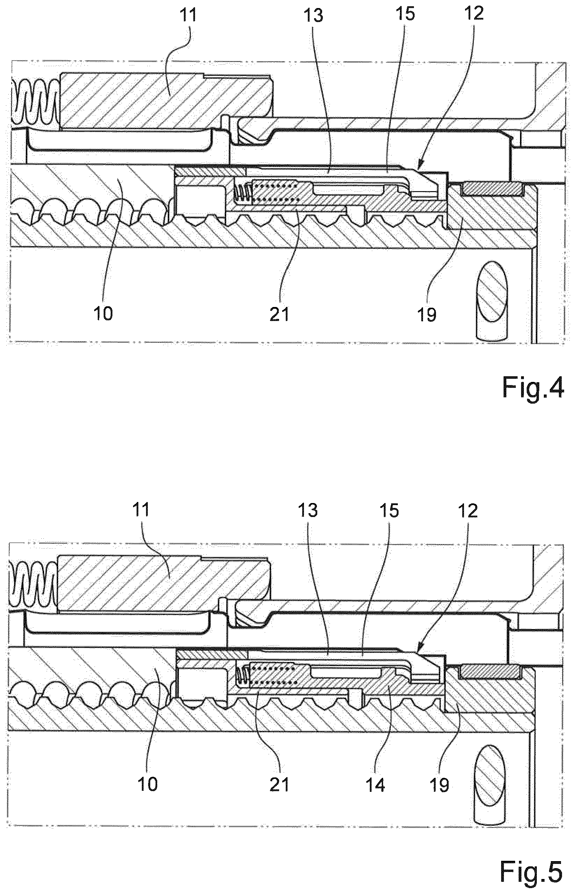

Tel que représenté à la figure 5, ce système de débrayage/d'embrayage automatique 12 est agencé dans un état débrayé lorsque le dispositif extensible 3 est positionné dans l'une au moins des positions extrémales choisie parmi la position extrémale rétractée et la position extrémale déployée.

En outre, le système de débrayage/d'embrayage automatique 12 comporte une bague à griffes 13 munie de griffes 15 déformables et aptes à se rapprocher les unes des autres. Une telle bague à griffes 13 est ainsi entrainée en translation par la pièce de sortie 10 du (ou des) organe(s) de conversion 8. Le système de débrayage/d'embrayage automatique 12 comporte également une bague interne 14 agencée mobile en translation par rapport à la bague à griffes 13 selon la direction de déploiement/rétraction D1.

Par ailleurs, la bague interne 14 permet de maintenir en position écartée de repos des extrémités libres 16 des griffes 15 de la bague à griffes 13 lorsque la bague interne 14 est positionnée dans une position embrayée. Les extrémités libres 16 des griffes 15 de la bague à griffes 13 peuvent se déformer et se rapprocher les unes des autres lorsque la bague interne 14 commence à quitter sa position embrayée et lorsqu'elle est positionnée dans sa position débrayée.

Un rapprochement des extrémités libres 16 des griffes 15 peut alors s'opérer lors du déplacement relatif en translation entre la bague à griffes 13 et le dispositif extensible 3. Un tel rapprochement est obtenu au moyen d'une forme conique extérieure 18 des extrémités libres 16 coopérant avec une portion conique intérieure 17 complémentaire ménagée dans le dispositif extensible 3.

En outre, le système de débrayage/d'embrayage automatique 12 comporte des moyens de butée 19 permettant d'empêcher un déplacement en translation selon la direction de déploiement/rétraction D1 de la bague interne 14 avec la bague à griffes 13. Dans ce cas et tel que représenté aux figures 3 et 4, la bague interne 14 est maintenue immobile au contact des moyens de butée 19 tandis que la bague à griffes 13 et le dispositif extensible 3 continuent à être déplacés en translation selon la direction de déploiement/rétraction D1 par rapport au châssis 2.

De plus, le système de débrayage/d'embrayage automatique 12 comporte aussi des moyens de rappel élastique 20 aptes à se déformer élastiquement entre une position détendue et une position comprimée.

Par suite, ces moyens de rappel élastique 20 permettent, lorsqu'ils sont agencés dans la position détendue, d'une part de maintenir la bague interne 14 dans la position embrayée et d'autre part de déplacer en translation la bague interne 14 avec la bague à griffes 13.

Au surplus, le système de débrayage/d'embrayage automatique 12 comporte également une bague de guidage 21 comportant des moyens de guidage 22 aptes à réaliser une liaison de type glissière à un degré de liberté en translation entre la bague interne 14 et la bague de guidage 21.

Pour passer de l'état embrayé à l'état débrayé automatiquement, le (ou les) moteur(s) électrique(s) 6 continue(nt) de fonctionner une fois le dispositif extensible 3 positionné dans l'une au moins des positions extrémales choisie parmi la position extrémale rétractée et la position extrémale déployée. Cela provoque alors le déplacement relatif en translation de la bague à griffes 13 par rapport à la bague interne 14 selon la direction de déploiement/rétraction D1 pour venir jusque dans la position débrayée de la bague interne 14 telle que représentée à la figure 5.

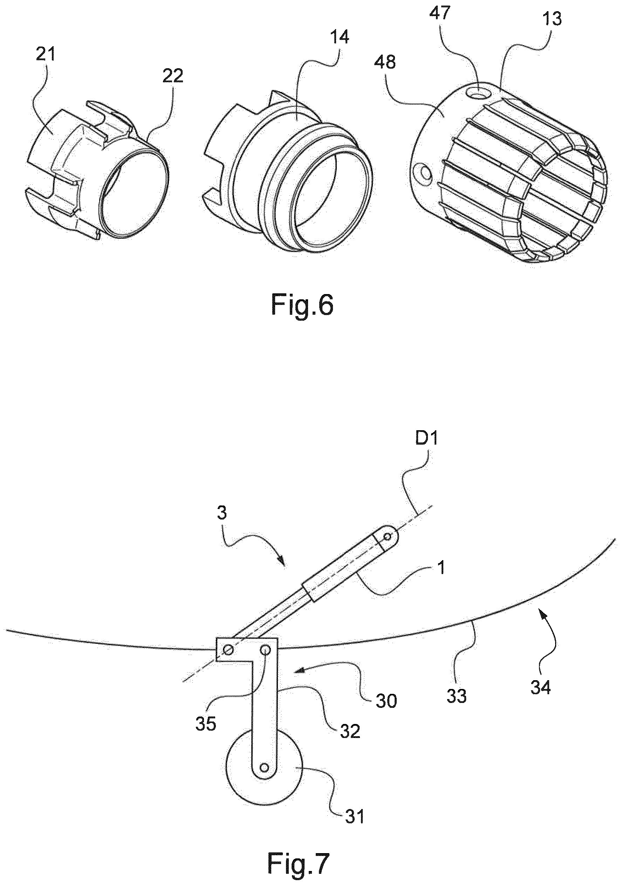

Telle que représentée à la figure 6, les moyens de guidage 22 de la bague de guidage 21 peuvent être formés par des rainures ou des cannelures coopérant avec des gorges complémentaires ménagées dans une face interne de la bague interne 14.

En outre, des moyens de solidarisation 46 représentés à la figure 3 peuvent être formés par des vis traversant radialement la bague à griffes 13 au niveau de trous 47 orientés radialement et agencés sur une portion lisse 48 de la bague à griffes 13.

Ces moyens de solidarisation 46 comportent une portion filetée venant se visser dans des taraudages complémentaires ménagés dans la pièce de sortie 10 du (ou des) organe(s) de conversion 8. De cette manière, la bague de guidage 21 et la bague à griffes 13 sont solidarisées entre elles par serrage et ne présentent aucun degré de liberté l'une par rapport à l'autre.

Telle que représentée à la figure 7, l'invention se rapporte également à un train d'atterrissage 30 pour un aéronef 34. Un tel train d'atterrissage 30 comporte notamment au moins une roue 31 montée sur un bras de support 32.

Tel que représenté, le bras de support 32 peut par exemple être articulé par rapport à un fuselage 33 de l'aéronef 34 de manière à le rendre escamotable lors d'une phase de vol.

Par ailleurs, un tel train d'atterrissage 30 comporte un actionneur linéaire 1 tel que décrit précédemment. De cette manière, le dispositif extensible 3 se déplace suivant la direction de déploiement/rétraction D1 entre la position extrémale rétractée et la position extrémale déployée pour déplacer en rotation la roue 31 et le bras de support 32 autour d'un axe de rotation 35

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Actionneur linéaire (1) à commande électrique, ledit actionneur linéaire (1) comportant :
• un châssis (2),
• un dispositif extensible (3) comportant une tige (4) et un cylindre (5), ladite tige (4) présentant par rapport audit cylindre (5) un degré de liberté en translation suivant une direction de déploiement/rétraction (D1) dudit actionneur linéaire (1),
• au moins un moteur électrique (6) solidarisé audit châssis (2), ledit au moins un moteur électrique (6) comportant un arbre d'entrainement (7) mobile en rotation par rapport audit châssis (2),
• au moins un organe de conversion (8) pour convertir un mouvement de rotation dudit arbre d'entrainement (7) dudit au moins un moteur électrique (6) en un mouvement de translation dudit dispositif extensible (3) suivant ladite direction de déploiement/rétraction (D1), ledit au moins un organe de conversion (8) comportant d'une part un axe d'entrée (9) mobile en rotation par rapport audit châssis (2), ledit axe d'entrée (9) étant entrainé en rotation par ledit arbre d'entrainement (7) dudit au moins un moteur électrique (6), et d'autre part une pièce de sortie (10) mobile en translation rectiligne par rapport audit châssis (2) suivant ladite direction de déploiement/rétraction (D1), ladite pièce de sortie (10) étant apte à déplacer suivant un mouvement de translation relative ladite tige (4) par rapport audit cylindre (5) ou, alternativement, ledit cylindre (5) par rapport à ladite tige (4), et
• des moyens de verrouillage automatique (11) permettant d'empêcher ledit mouvement de translation relative entre ladite tige (4) et ledit cylindre (5) dans au moins une position extrémale choisie parmi une position extrémale rétractée dudit dispositif extensible (3) et en une position extrémale déployée dudit dispositif extensible (3),
**caractérisé en ce que** ledit actionneur linéaire (1) comporte un système de débrayage/d'embrayage automatique (12) permettant de débrayer/d'embrayer mécaniquement ladite pièce de sortie (10) dudit au moins un organe de conversion (8) avec ledit dispositif extensible (3), ledit système de débrayage/d'embrayage automatique (12) étant agencé dans un état débrayé lorsque ledit dispositif extensible (3) est positionné dans l'une au moins desdites positions extrémales choisie parmi ladite position extrémale rétractée et ladite position extrémale déployée, ledit système de débrayage/d'embrayage automatique (12) étant agencé dans un état embrayé lorsque ledit dispositif extensible (3) est positionné dans une position intermédiaire agencée entre ladite position extrémale rétractée et ladite position extrémale déployée.

2. Actionneur linéaire (1) selon la revendication 1,
**caractérisé en ce que** le système de débrayage/d'embrayage automatique (12) comporte une bague à griffes (13) munie de griffes (15) déformables, ladite bague à griffes (13) étant entrainée en translation par ladite pièce de sortie (10) dudit au moins un organe de conversion (8) et une bague interne (14) mobile en translation par rapport à ladite bague à griffes (13) selon ladite direction de déploiement/rétraction (D1), des extrémités libres (16) des griffes (15) de ladite bague à griffes (13) étant maintenues en position par ladite bague interne (14) lorsque ladite bague interne (14) est positionnée dans une position embrayée et lesdites extrémités libres (16) des griffes (15) de ladite bague à griffes (13) étant aptes à se déformer lorsque ladite bague interne (14) est positionnée dans une position débrayée.

3. Actionneur linéaire (1) selon la revendication 2,
**caractérisé en ce que** lesdites extrémités libres (16) des griffes (15) génèrent une forme conique extérieure (17) apte à coopérer avec une portion conique intérieure (18) complémentaire ménagée dans ledit dispositif extensible (3).

4. Actionneur linéaire (1) selon l'une quelconque des revendications 2 à 3,
**caractérisé en ce que** ledit système de débrayage/d'embrayage automatique (12) comporte des moyens de butée (19) permettant d'empêcher un déplacement en translation selon ladite direction de déploiement/rétraction (D1) de ladite bague interne (14) concomitamment avec ladite bague à griffes (13).

5. Actionneur linéaire (1) selon l'une quelconque des revendications 2 à 4,
**caractérisé en ce que** ledit système de débrayage/d'embrayage automatique (12) comporte des moyens de rappel élastique (20) aptes à se déformer élastiquement entre une position détendue et une position comprimée, lesdits moyens de rappel élastique (20) permettant, lorsque lesdits moyens de rappel élastique (20) sont agencés dans ladite position détendue, d'une part de maintenir ladite bague interne (14) dans ladite position embrayée et d'autre part de déplacer en translation ladite bague interne (14) concomitamment avec ladite bague à griffes (13).

6. Actionneur linéaire (1) selon l'une quelconque des revendications 2 à 5,
**caractérisé en ce que** ledit système de débrayage/d'embrayage automatique (12) comporte une bague de guidage (21) comportant des moyens de guidage (22) aptes à réaliser une liaison de type glissière à un degré de liberté en translation entre ladite bague interne (14) et ladite bague de guidage (21).

7. Train d'atterrissage (30) pour un aéronef (34), ledit train d'atterrissage (30) comportant au moins une roue (31) montée sur un bras de support (32),
**caractérisé en ce que** ledit train d'atterrissage (30) comporte un actionneur linéaire (1) selon l'une quelconque des revendications 1 à 6, ledit dispositif extensible (3) se déplaçant suivant ladite direction de déploiement/rétraction (D1) entre ladite position extrémale rétractée et ladite position extrémale déployée pour déplacer ladite au moins une roue (31) et ledit bras de support (32) dudit train d'atterrissage (30) par rapport à un fuselage (33) dudit aéronef (34).

## Patentansprüche

1. Elektrisch gesteuertes lineares Stellglied (1), wobei das lineare Stellglied (1) umfasst:
• einen Rahmen (2),
• eine ausfahrbare Vorrichtung (3), die eine Stange (4) und einen Zylinder (5) umfasst, wobei die Stange (4) in Bezug auf den Zylinder (5) einen translatorischen Freiheitsgrad entlang einer Ausfahr-/ Einfahrrichtung (D1) des linearen Stellglieds (1) aufweist,
• mindestens einen Elektromotor (6), der an dem Rahmen (2) befestigt ist, wobei der mindestens eine Elektromotor (6) eine Antriebswelle (7) umfasst, die relativ zu dem Rahmen (2) drehbar ist,
• mindestens ein Umwandlungselement (8) zum Umwandeln einer Drehbewegung der Antriebswelle (7) des mindestens einen Elektromotors (6) in eine Translationsbewegung der ausfahrbaren Vorrichtung (3) in der Ausfahr-/Einfahrrichtung (D1), wobei das mindestens eine Umwandlungselement (8) einerseits eine Eingangswelle (9), die in Bezug auf den Rahmen (2) drehbeweglich ist, wobei die Eingangswelle (9) von der Antriebswelle (7) des mindestens einen Elektromotors (6) drehangetrieben ist, und andererseits ein Ausgangsteil (10) umfasst, das in Bezug auf den Rahmen (2) in der Ausfahr-/Einfahrrichtung (D1) geradlinig verschiebbar ist, wobei das Ausgangsteil (10) in der Lage ist, die Stange (4) in Bezug auf den Zylinder (5) oder alternativ den Zylinder (5) in Bezug auf die Stange (4) in einer relativen Translationsbewegung zu verschieben, und
• eine automatische Verriegelungseinrichtung (11) zum Verhindern der relativen Translationsbewegung zwischen der Stange (4) und dem Zylinder (5) in mindestens einer Endposition, die unter einer eingefahrenen Endposition der ausfahrbaren Vorrichtung (3) und einer ausgefahrenen Endposition der ausfahrbaren Vorrichtung (3) ausgewählt ist,
**dadurch gekennzeichnet, dass** das lineare Stellglied (1) ein automatisches Auskupplungs-/Einkupplungssystem (12) zum mechanischen Auskuppeln/Einkuppeln des Ausgangsteils (10) des mindestens einen Umwandlungselements (8) mit der ausfahrbaren Vorrichtung (3) umfasst, wobei das automatische Auskupplungs-/Einkupplungssystem (12) in einem ausgekuppelten Zustand angeordnet ist, wenn die ausfahrbare Vorrichtung (3) in mindestens einer der Endpositionen positioniert ist, die unter der eingefahrenen Endposition und der ausgefahrenen Endposition ausgewählt ist, wobei das automatische Auskupplungs-/Einkupplungssystem (12) in einem eingekuppelten Zustand angeordnet ist, wenn die ausfahrbare Vorrichtung (3) in einer Zwischenposition positioniert ist, die zwischen der eingefahrenen Endposition und der ausgefahrenen Endposition angeordnet ist.

2. Lineares Stellglied (1) nach Anspruch 1,
**dadurch gekennzeichnet, dass** das automatische Auskupplungs-/Einkupplungssystem (12) einen Klauenring (13), der mit verformbaren Klauen (15) versehen ist, wobei der Klauenring (13) durch das Ausgangsteil (10) des mindestens einen Umwandlungselements (8) translatorisch angetrieben ist, und einen Innenring (14) umfasst, der in Bezug auf den Klauenring (13) in der Ausfahr-/Einfahrrichtung (D1) translatorisch beweglich ist, wobei freie Enden (16) der Klauen (15) des Klauenrings (13) durch den Innenring (14) in Position gehalten werden, wenn der Innenring (14) in einer eingekuppelten Position positioniert ist, und die freien Enden (16) der Klauen (15) des Klauenrings (13) in der Lage sind, sich zu verformen, wenn der Innenring (14) in einer ausgekuppelten Position positioniert ist.

3. Lineares Stellglied (1) nach Anspruch 2,
**dadurch gekennzeichnet, dass** die freien Enden (16) der Klauen (15) eine äußere konische Form (17) bilden, die in der Lage ist, mit einem komplementären inneren konischen Abschnitt (18) zusammenzuwirken, der in der ausfahrbaren Vorrichtung (3) gebildet ist.

4. Lineares Stellglied (1) nach einem der Ansprüche 2 bis 3,
**dadurch gekennzeichnet, dass** das automatische Auskupplungs-/Einkupplungssystem (12) Anschlagmittel (19) umfasst, die es zusammenwirkend mit dem Klauenring (13) ermöglichen, eine Translationsbewegung des Innenrings (14) in der Ausfahr-/Einfahrrichtung (D1) zu verhindern.

5. Lineares Stellglied (1) nach einem der Ansprüche 2 bis 4,
**dadurch gekennzeichnet, dass** das automatische Auskupplungs-/Einkupplungssystem (12) elastische Rückstellmittel (20) umfasst, die zwischen einer entspannten Position und einer zusammengedrückten Position elastisch verformbar sind, wobei die elastischen Rückstellmittel (20) es ermöglichen, wenn die elastischen Rückstellmittel (20) in der entspannten Position angeordnet sind, einerseits den Innenring (14) in der eingekuppelten Position zu halten und andererseits zusammenwirkend mit dem Klauenring (13) den Innenring (14) in Translation zu bewegen.

6. Linearantrieb (1) nach einem der Ansprüche 2 bis 5,
**dadurch gekennzeichnet, dass** das automatische Auskupplungs-/Einkupplungssystem (12) einen Führungsring (21) mit Führungsmitteln (22) umfasst, die in der Lage sind, eine gleitende Verbindung mit einem Translationsfreiheitsgrad zwischen dem Innenring (14) und dem Führungsring (21) herzustellen.

7. Fahrwerk (30) für ein Flugzeug (34), wobei das Fahrwerk (30) mindestens ein Rad (31) umfasst, das an einem Tragarm (32) angebracht ist,
**dadurch gekennzeichnet, dass** das Fahrwerk (30) ein lineares Stellglied (1) nach einem der Ansprüche 1 bis 6 umfasst, wobei sich die ausfahrbare Vorrichtung (3) in der Ausfahr-/Einfahrrichtung (D1) zwischen der eingefahrenen Endposition und der ausgefahrenen Endposition bewegt, um das mindestens eine Rad (31) und den Tragarm (32) des Fahrwerks (30) relativ zu einem Rumpf (33) des Flugzeugs (34) zu bewegen.

## Claims

1. Electrically controlled linear actuator (1), said linear actuator (1) including:
• a frame (2),
• an extensible device (3) including a rod (4) and a cylinder (5), said rod (4) having, with respect to said cylinder (5), a degree of freedom in translation in an extension/retraction direction (D1) of said linear actuator (1),
• at least one electric motor (6) rigidly connected to said frame (2), said at least one electric motor (6) including a drive shaft (7) that can rotate with respect to said frame (2),
• at least one conversion member (8) for converting a rotational movement of said drive shaft (7) of said at least one electric motor (6) into a translational movement of said extensible device (3) in said extension/retraction direction (D1), said at least one conversion member (8) including an input shaft (9) that can rotate with respect to said frame (2), said input shaft (9) being driven in rotation by said drive shaft (7) of said at least one electric motor (6), and also an output part (10) that can translate rectilinearly with respect to said frame (2) in said extension/retraction direction (D1), said output part (10) being capable of moving, in a relative translational movement, said rod (4) with respect to said cylinder (5) or, alternatively, said cylinder (5) with respect to said rod (4), and
• automatic locking means (11) for preventing said relative translational movement between said rod (4) and said cylinder (5) in at least one end position selected from a retracted end position of said extensible device (3) and an extended end position of said extensible device (3),
**characterised in that** said linear actuator (1) includes an automatic disengaging/engaging system (12) for mechanically disengaging said output part (10) of said at least one conversion member (8) from said extensible device (3) or for mechanically engaging said part with said device, said automatic disengaging/engaging system (12) being arranged in a disengaged state when said extensible device (3) is positioned in at least one of said end positions selected from said retracted end position and said extended end position, said automatic disengaging/engaging system (12) being arranged in an engaged state when said extensible device (3) is positioned in an intermediate position arranged between said retracted end position and said extended end position.

2. Linear actuator (1) according to claim 1, **characterised in that** the automatic disengaging/engaging system (12) includes a claw ring (13) provided with deformable claws (15), said claw ring (13) being translated by said output part (10) of said at least one conversion member (8), and an inner ring (14) that can translate with respect to said claw ring (13) in said extension/retraction direction (D1), free ends (16) of the claws (15) of said claw ring (13) being held in position by said inner ring (14) when said inner ring (14) is positioned in an engaged position and said free ends (16) of the claws (15) of said claw ring (13) being capable of deforming when said inner ring (14) is positioned in a disengaged position.

3. Linear actuator (1) according to claim 2, **characterised in that** said free ends (16) of the claws (15) produce an outer conical shape (17) capable of interacting with a complementary inner conical portion (18) provided in said extensible device (3).

4. Linear actuator (1) according to either claim 2 or claim 3, **characterised in that** said automatic disengaging/engaging system (12) includes stop means (19) for preventing a translational movement, in said extension/retraction direction (D1), of said inner ring (14) together with said claw ring (13).

5. Linear actuator (1) according to any of claims 2 to 4, **characterised in that** said automatic disengaging/engaging system (12) includes elastic return means (20) capable of deforming elastically between a relaxed position and a compressed position, said elastic return means (20) making it possible, when said elastic return means (20) are arranged in said relaxed position, to hold said inner ring (14) in said engaged position and also to translate said inner ring (14) together with said claw ring (13).

6. Linear actuator (1) according to any of claims 2 to 5, **characterised in that** said automatic disengaging/engaging system (12) includes a guide ring (21) including guide means (22) capable of producing a slide-type link having a degree of freedom in translation between said inner ring (14) and said guide ring (21).

7. Landing gear (30) for an aircraft (34), said landing gear (30) including at least one wheel (31) mounted on a support arm (32), **characterised in that** said landing gear (30) includes a linear actuator (1) according to any of claims 1 to 6, said extensible device (3) moving in said extension/retraction direction (D1) between said retracted end position and said extended end position in order to move said at least one wheel (31) and said support arm (32) of said landing gear (30) with respect to a fuselage (33) of said aircraft (34).
